# EUROPÄISCHE PATENTSCHRIFT

(11) **EP 1 177 422 B1**
(45) Veröffentlichungstag und Bekanntmachung des Hinweises auf die Patenterteilung: **10.11.2004**
(21) Anmeldenummer: 00931126.7
(22) Anmeldetag: 05.05.2000
(51) Int. Cl.: G01N 1/42, A01N 1/02, F25D 25/00

(54) **VERFAHREN UND VORRICHTUNG ZUR PROBENAUFNAHME AN KRYOSUBSTRATEN**
METHOD AND DEVICE FOR ACCOMMODATING SAMPLES ON CRYOSUBSTRATES
PROCEDE ET DISPOSITIF DE PRISE D'ECHANTILLONS SUR DES CRYOSUBSTRATS

(30) Priorität: 07.05.1999 DE 19921236
(43) Veröffentlichungstag der Anmeldung: 06.02.2002
(73) Patentinhaber: Evotec Technologies GmbH, 40225 Düsseldorf (DE)
(72) Erfinder: FUHR, Günter, D-13187 Berlin (DE); HAGEDORN, Rolf, D-13057 Berlin (DE)
(74) Vertreter: Hertz, Oliver, Dr.
(86) Internationale Anmeldenummer: PCT/EP2000/004063
(87) Internationale Veröffentlichungsnummer: WO 2000/068663

(56) Entgegenhaltungen:
- EP-A- 0 804 073
- WO-A-98/43592
- DE-A- 19 716 913
- US-A- 5 233 844

## Beschreibung

Die Erfindung betrifft ein Verfahren zur Probenaufnahme an Kryosubstraten, insbesondere ein Verfahren zur Übertragung von Proben im kryokonservierten oder aufgetauten Zustand von einem Kryosubstrat zu einem Zielsubstrat. Die Erfindung betrifft auch eine Vorrichtung zur Implementierung eines derartigen Verfahrens und ein zur Probenaufnahme funktionell strukturiertes Kryosubstrat.

Der Betrieb von Kryobanken zur Konservierung von biologischem Zellmaterial ist in der Zellbiologie, Molekularbiologie oder Gentechnik allgemein bekannt. In einer Kryobank wird das Zellmaterial über Jahrzehnte verfügbar gehalten, wobei beispielsweise suspendierte Zellen in kleinvolumigen, mit einer Kryoflüssigkeit gefüllten Behältern (Volumen im Bereich von 0.1 bis einige ml) eingefroren werden. Um die Lebensfähigkeit des Zellmaterials nach dem Auftauen zu gewährleisten, wurden zahlreiche Prozeduren entwickelt, die sich beispielsweise auf den Zeitablauf des Auftauens, Medienzugaben, Behälterformen und dgl. beziehen. Mit herkömmlichen Kryobanken werden beim Auftauen Überlebensraten im Bereich weniger Prozent bis zu 90% erzielt. Obwohl dies bereits ein relativ gutes Ergebnis ist und Kryobanken weltweit Verbreitung gefunden haben, sind mit den bisher verbreiteten Kryokonservierungsprozeduren die folgenden Nachteile verbunden.

Die Lage einzelner Zellmaterialproben im Volumen der Kryoflüssigkeit ist sowohl während der Einfrier- als auch während der Auftauprozeduren unbekannt. Die Materialproben sind im kryokonservierten, tiefgefrerenen Zustand nicht zugänglich. Es besteht jedoch ein Interesse daran, beispielsweise einzelne Zelien vom kryokonservierten Material zu entnehmen, zu vermessen oder zu verändern. Um Zellen dennoch entnehmen zu können, muß die gesamte Probe aufgetaut werden. Dies erfordert eine aufwendige Nachkultivierung des Zellmaterials zum Ausgleich der Auftauverluste. Das kryokonservierte Material umfaßt dadurch im Zeitverlauf nicht mehr nur die ursprünglich konservierten Zellen, sondern ein Gemisch aus Tochterzellen der verschiedensten Generationen, wodurch die Spezifität und Reproduzierbarkeit von Zelluntersuchungen eingeschränkt wird. Um alle Materialproben in einem Kryobehälter dem gleichen Abkühlverlauf auszusetzen, müssen extrem langsame Einfriervorgänge vorgesehen werden, da die Abkuhlung von den Behälterwänden ausgeht und alle Proben im Kryovolumen annähernd den gleichen zeitlichen Temperaturverlauf erfahren sollen. Schließlich erschwert oder verhindert das Suspensionsmedium (Kryoflüssigkeit) die Vermessung und Bearbeitung einzelner Zellen bei tiefen Temperaturen.

Es besteht ein Interesse an neuen Kryokonservierungstechniken zur Überwindung der genannten Nachteile und zur Erschließung neuer Felder für die Zellkonservierung, insbesondere da die Untersuchungen in der Biotechnologie, Gentechnik oder Medizin zunehmend auf Einzelzellen gerichtet sind, wie z.B. bei der Hybridoma-Zellproduktion im Zusammenhang mit der Tumorbekämpfung, der Stammzellenkultur und der Embryogenese. Bei der Entwicklung neuer Kryokonservierungstechniken geht man von den folgenden Kenntnissen und Überlegungen aus.

Aus physikalischer und auch physiologischer Sicht befindet sich eine bei -196°C eingefrorene Zelle im Zustand eines Festkörpers. Die Stoffwechselprozesse sind bis zur molekularen Ebene vollständig zum Stillstand gekommen. Zellveränderungen ergeben sich lediglich durch langsame Umstrukturierungen (z.B. durch Eiskristallwachstum bei Temperaturen oberhalb -60°C) und durch Schädigung aufgrund kosmischer Strahlung. Letztere besitzt allerdings eine für praktische Anwendungen unkritische Rate von rd. 90% Schädigung nach 30 000 Jahren. Im tiefgefrorenen Zustand sollten sich daher Zellen chne Zeitdruck und mit höchster Präzision vermessen, behandeln, verändern, sortieren und mechanisch robust anderweitig manipulieren lassen. Dies setzt allerdings die individuelle Handhabbarkeit der Zellen im Kryomedium und die Verfügbarkeit von Werkzeugen zur Zellmanipulierung voraus.

Die physikalischen und chemischen Vorgänge beim Einfrieren oder Auftauen biologischen Materials werden beispielsweise in der Publikation von F. Franks "Biophysics and biochemistry of low temperature and freezing" in "Effects of Low Temperatures on Biological Membranes" (Herausgeber G. J. Morris et al., Academic Press, London, 1981) oder P. Mazur in "Ann. N.Y. Acad. Sci.", Band 541, 1988, S. 514 ff. beschrieben. Entscheidend für eine Gefrierkonservierung über lange Zeiträume und ein Auftauen mit möglichst großer Überlebensrate ist die Verhinderung der Bildung von intra- oder extrazellulären Eiskristallen und einer übermäßigen Dehydrierung der Zellen. Dabei sind aus physikalischer Sicht die folgenden Besonderheiten beim Einfrieren und Auftauen zu beachten. Es ist zwar bekannt, sogenanntes vitrifiziertes Wasser durch extrem hohe Einfriergeschwindigkeiten zu erzeugen, bei denen jegliche Eiskristallbildung unterbunden wird. Dies ist jedoch auf ein schonendes und lagedefiniertes Einfrieren von Zellmaterial nicht anwendbar, da die Größe der interessierenden biologischen Zellen und die Wärmeleitung die Einfriergeschwindigkeit auf Werte unterhalb von einigen 10 000 Grad pro Sekunde beschränken. Deshalb ist im mikroskopischen Maßstab und unter physiologischen Bedingungen in der Regel eine Entmischung, d.h. eine Bildung eutektischer Phasen, die auch reine Eisdomänen umfassen, beobachtbar. Zur Minimierung der Entmischung haben insbesondere zu Beginn der Abkühlung (bis -30°C) zellspezifische Einfrierprogramme die besten Ergebnisse geliefert (s. auch S. P. Leibo et al. in "Cryobiol.", Band 8, 1971, S. 447 ff.). In diesem Temperaturintervall haben sich Abkühlraten von einigen Grad pro Minute günstiger als schnelle Temperatursprünge erwiesen. Es wird daher davon ausgegangen, daß die Abkühl- und Auftauprozeduren mit einem biologisch bestimmten, zeitlichen Temperaturprofil durchzuführen sind.

Sobald Temperaturen erreicht werden, bei denen die Eisbildung einsetzt, sind jedoch höhere Abkühlraten sinnvoll, da damit das migratorische Wachstum großer Eisdomänen auf Kosten kleinerer verhindert werden kann. Bei Temperaturen unterhalb des Bereiches von -80°C erfolgt kein weiteres Eiskristallwachstum, so daß eine Zellagerung über lange Zeiträume möglich ist. Üblicherweise erfolgt die Lagerung der Behälter mit Zellmaterial, das in einer Kryoflüssigkeit suspendiert ist, in flüssigen Stickstoff (bei -196°C). Da die Probenbehälter verschlossen sind, ist kein direkter Kontakt mit der flüssigen Kühlphase gegeben. Für das Auftauen des Zellmaterials werden vergleichbare Temperaturabläufe eingestellt.

Abkühlprozeduren sind auch aus der Präparation für elektronenmikroskopische Aufnahmen bekannt (s. D. G. Robinson et al. in "Präparationsmethodik in der Elektronenmikroskopie", Springer-Verlag, Berlin, 1985). Im Unterschied zur Kryokonservierung mit dem Ziel des Vitalitätserhalts der Zellen spielt bei der Elektronenmikroskopie die möglichst unveränderte molekulare Position der Zellkomponenten die entscheidende Rolle. Daher werden bei dieser Präparation besonders schnelle Einfriertechniken realisiert, die z.B. ein Einschießen der Probe in flüssige oder unterkühlte Gase oder ein Einsprühen von Tröpfen in eine unterkühlte Atmosphäre und Flüssigkeiten umfassen. Dabei werden Abkühlraten von mehr als 10 000 Grad pro Sekunde erreicht, die allerdings wegen des Zellvolumens, der endlichen Wärmeleitfähigkeit und der Benetzbarkeit des Materials einen Grenzwert darstellen.

Ein generelles Problem bei der Kryokonservierung besteht darin, daß sich nicht alle Zellarten in gleicher Weise kryokonservieren lassen. Insbesondere größere Objekte (Zellhaufen oder dgl.) oder auch stark vakuolenhaltige Zellen, wie sie speziell bei pflanzlichem Probenmaterial auftreten, lassen sich nur schwer oder überhaupt nicht revitalisieren. Auf diese Probleme ist die Entwicklung neuer Mikroinjektions- und Zellhandhabungstechniken sowie neuer Kryoprotektiva gerichtet. Eine von der oben erläuterten Konservierung in Behältern abweichende Technik basiert auf dem Einfrieren bzw. Auftauen des zu konservierenden Zellmaterials in adhärierter Form auf gekühlten Oberflächen (s. z.B. T. Ohno et al. in "Cryotechnol.", Band 5, 1991, S. 273 ff.).

Die Kryokonservierung an gekühlten Oberflächen ist zwar schwieriger zu handhaben als das Suspensionsprinzip, hat sich jedoch vorteilhaft bei der Untersuchung der bei der Kryokonservierung stattfindenden Prozesse und bei der Erzielung hoher Überlebensraten beim Auftauen erwiesen. Die Kryokonservierung auf Substratoberflächen erlaubt es, daß Randbedingungen der jeweiligen Prozedur, wie z.B. Oberflächentemperatur, Wärmeleitung, Zell- oder Tropfengröße u. dgl., genauer und variabler als in der Suspension eines Kryomediums eingestellt und erfaßt werden können. Dies wird insbesondere bei der Kryomikroskopie ausgenutzt, wobei biologische Zellen, die in Lösungsmitteltropfen eingeschlossen sind, auf tiefgekühlte Oberflächen aufgenebelt oder aufgesprüht werden (s. H. Plattner et al. in "Freeze-etching. Techniques and Application", Herausgeber E. L. Benedetti et al., "Soc. Franc. Microsc. Electronique", Paris 1973, S. 81 ff., und PCT/US94/01156). Ein Nachteil der zunächst entwickelten Kryokonservierung an Substratoberflächen besteht darin, daß beim Aufnebeln oder Aufsprühen die Position und Anordnung der Zellen nicht steuerbar ist und daß sogar mehrere Tropfen- und Zellenlagen übereinander abgelegt werden.

Eine Verbesserung der Kryokonservierung auf Substratoberflächen wird in EP 804 073 beschrieben. Biologische Zellen werden von einer Umhüllungslösung umgeben mit einer Mikrotropfenschußeinrichtung in vorbestimter Weise auf temperierbaren Substraten plaziert. Die Mikrotropfenschußeinrichtung, die nach Art eines Tintenstrahldruckers ansteuerbar ist, erlaubt eine hochgenaue und reproduzierbare Positionierung einzelner Materialproben auf dem Kryosubstrat. Aus EP 804 073 ist auch bekannt, das Kryosubstrat durch matrixartig angebrachte Ausnehmungen zu strukturieren, um bestimmte Prozeduren bei der Kryokonservierung bzw. beim Auftauen des Substrats zu ermöglichen. So sind die Ausnehmungen insbesondere für ein gerichtetes Ablegen der Zellen ausgelegt. Zur Bereitstellung von Testchips, mit denen die Wechselwirkung verschiedenartiger Zellen im aufgetauten Zustand untersucht werden sollen, werden verschiedene Zellarten in oder zwischen den Ausnehmungen abgelegt. Des weiteren ist aus EP 804 073 bekannt, an den Ausnehmungen Elektroden zur Implementierung hochfrequenter elektrischer Felder vorzusehen, unter deren Wirkung eine Untersuchung der Zellen im aufgetauten Zustand durchgeführt wird.

Die Kryokonservierung an gekühlten Oberflächen besitzt bisher den Nachteil, daß nach der Aufbringung auf das Kryosubstrat eine probenspezifische Handhabung einzelner Zellen nur im tiefgefrorenen oder aufgetauten Zustand am Kryosubstrat möglich war. Falls eine Bearbeitung im aufgetauten Zustand vorgesehen war, so mußte das gesamte Substrat erwärmt werden. Für eine Verbesserung der Untersuchungstechniken und eine erhöhte Ausnutzung kryokonservierter Probenbestände ist es jedoch wichtig, die einzelnen Materialproben einer spezifischen Handhabung zugänglich zu machen.

Die Aufgabe der Erfindung besteht in der Schaffung eines verbesserten Verfahrens zur Probenaufnahme an Kryosubstraten, das insbesondere eine selektive Aufnahme vorbestimmter Proben oder Probengruppen von einem Kryosubstrat erlaubt. Die Aufgabe der Erfindung ist es auch, Vorrichtungen zur Implementierung eines derartigen Verfahrens anzugeben.

Diese Aufgaben werden durch ein Verfahren bzw. Vorrichtungen mit den Merkmalen gemäß den Patentansprüche 1, 11 bzw. 18 gelöst. Vorteilhafte Ausführungsformen und Verwendungen der Erfindung ergeben sich aus den abhängigen Ansprüchen.

Erfindungsgemäß erfolgt an einem Kryosubstrat mit einer Vielzahl von Proben, die an vorbestimmten Probenpositionen angeordnet sind, eine vorbestimmte, selektive Probenaufnahme durch eine positionsspezifische, mechanische oder thermische Abtrennung der Proben vom Kryosubstrat und eine Übertragung der freigegebenen Proben auf ein Zielsubstrat. Unter Probenaufnahme wird hierbei allgemein jede Form der Auf- oder Entnahme von Proben, gegebenenfalls mit bestimmten Substratteilen, verstanden.

Als Kryosubstrat (oder: Trägersubstrat, Substrat) wird hier jede Einrichtung bezeichnet, die sich als Träger für an gekühlten Oberflächen eingefrorene Proben eignet. Es dient der Probenkonservierung oder -lagerung. Das Kryosubstrat besteht aus einem Trägermaterial zur linien- oder flächenförmigen Probenanordnung mit einer unten im einzelnen erläuterten funktionellen Oberflächenstrukturierung. Gemäß einer bevorzugten Ausführungsform besteht das Trägermaterial aus einem inerten, mit an sich bekannten mechanischen oder chemischen Bearbeitungsmitteln strukturierbaren Material, wie z.B. Kunststoff, Keramik, Metall oder Halbleitermaterial. Das Kryosubstrat bildet vorzugsweise einen starren, flächigen, ebenen oder gekrümmten Körper, der in an sich bekannter Weise mit einer Temperierungseinrichtung verbunden ist. Alternativ kann das Kryosubstrat aber auch aus einem flexiblen, folienartigen Trägermaterial, z.B. aus Kunststoff, bestehen.

Das Trägermaterial ist mit der Oberflächenstrukturierung vorzugsweise einstückig ausgebildet, kann aber auch bei bestimmten Ausführungsformen eine Zusammensetzung aus den genannten Materialen umfassen. Diese Zusammensetzung kann beispielsweise ein elektrisch isolierendes Grundmaterial mit bestimmten Oberflächenbeschichtungen, beispielsweise aus Metall, darstellen. Unter einer funktionellen Oberflächenstrukturierung zur Realisierung der vorliegenden Erfindung wird allgemein jede Art der geometrischen oder stofflichen Veränderung des Kryosubstrats verstanden, durch die entsprechend den Probenpositionen auf dem Kryosubstrat örtlich begrenzte Ablagebereiche geschaffen werden, von denen die jeweilige Probe oder Proben selektiv abnehmbar sind, ohne daß das gesamte Kryosubstrat erwärmt werden muß. Die erfindungsgemäße Probenaufnahme erfolgt demnach vorzugsweise an Kryosubstraten im tiefgekühlten Betriebszustand.

Das erfindungsgemäße Verfahren kann mit beliebigen Proben implementiert werden, die tiefgefroren (z.B. bei der Temperatur von flüssigem Stickstoff) auf einem Kryosubstrat angebracht sind. Vorzugsweise bestehen die Proben aus biologischen Materialien, wie z.B. biologische Zellen oder Zellgruppen oder Zellbestandteile, ggf. jeweils mit einem Umhüllungsmedium. Die Erfindung ist aber auch mit synthetischen Materialien, wie z.B. Vesikeln, oder mit Zusammensetzungen aus biologischen und synthetischen Materialien anwendbar.

Die erfindungsgemäße Probenaufnahme und -übertragung erfolgt auf ein Zielsubstrat, mit dem allgemein jede Art einer Einrichtung zur weiteren Handhabung oder Manipulierung der Probe bezeichnet wird. Beim Zielsubstrat erfolgt beispielsweise eine Lagerung, eine mechanische oder chemische Bearbeitung oder eine Untersuchung der Probe. Das Zielsubstrat kann somit auch ein Kryosubstrat eines weiteren Konservierungssystems sein.

Eine positionsselektive mechanische Abtrennung von Proben vom Kryosubstrat umfaßt ein Abtrennen vorbestimmter Ablageelemente mit den jeweiligen Proben oder Probengruppen vom Substrat. Diese Abtrennung erfolgt mit einem geeigneten Werkzeug vorzugsweise unter Beibehaltung des kryokonservierten Zustands der Proben. Es kann jedoch auch eine mechanische Abtrennung im aufgetauten Probenzustand vorgesehen sein. Eine thermische Abtrennung erfolgt gemäß einer ersten Ausführungsform der Erfindung durch eine positionsspezifische Erhöhung der Substrattemperatur derart, daß die entsprechende Probe aufgetaut und mit einem geeigneten Werkzeug (z.B. Mikropipette, Pickingsnadel) abgenommen wird, oder daß positionsspezifisch Ablageelemente mit konservierten Proben thermisch vom Substrat abgetrennt werden. Zur thermischen Abtrennung wird eine elektrische Widerstandserwärmung oder eine Strahlungserwärmung (Laser, Mikrowellen oder dgl.) an der gewünschten Probenposition verwendet. Bei einer alternativen Form einer thermischen Probenabtrennung ist ein Anfrieren der gewünschten Proben an ein strukturiertes Werkzeug vorgesehen, das eine stärkere Haftung der angefrorenen Proben im Vergleich zur Haftung an einem Probenträger bereitstellt.

Gegenstand der Erfindung ist auch ein Probenaufnahme- oder Probenhandhabungssystem zur Aufnahme und/oder Übertragung von Proben von einem Kryosubstrat auf ein Zielsubstrat, wobei ein derartiges System insbesondere ein funktionell strukturiertes Kryosubstrat, eine Abtrenneinrichtung und eine Steuereinrichtung umfaßt. Die Abtrenneinrichtung dient als Trenneinrichtung und/oder als Aufnehmer für die abgetrennte oder freigegebene Probe.

Gemäß einem besonders wichtigen Gesichtspunkt der Erfindung wird ein Kryosubstrat mit einer funktionell strukturierten Oberfläche ausgestattet, die eine Vielzahl von Ablageelementen (z.B. Ablageplatten, Ablagefolien) umfaßt, die zur Aufnahme jeweils einer Materialprobe und zur selektiven mechanischen oder thermischen Abtrennung der Probe, gegebenenfalls mit einem Teil des Ablageelements, vom Kryosubstrat ausgebildet sind. Die Dimensionierung der Ablageelemente ist anwendungsabhängig gewählt. Ein Ablageelement kann charakteristische Dimensionen der Größenordnung von 1 cm² bis 1 mm² oder auch darunter besitzen. Es kann auch die Abtrennung ganzer Probengruppen vom Kryosubstrat vorgesehen sein.

Die Erfindung besitzt den Vorteil, daß erstmalig die Beschränkungen der Kryokonservierung an temperierten Substratoberflächen überwunden und eine selektive Bearbeitung einzelner Proben ermöglicht werden. Damit wird die Effektivität der Einzelzellenkryokonservierung wesentlich erhöht. Die Gestaltung eines erfindungsgemäßen Kryosubstrats basiert auf an sich bekannten, gut beherrschbaren Strukturierungsmethoden. Die Kryosubstrate können aus kostengünstigem Material als Einweg-Produkte hergestellt werden. Ein weiterer Vorteil betrifft die Automatisierungsfähigkeit des Gesamtsystems. Durch die Kombination der Probenaufnahme mit einem Bildverarbeitungssystem kann eine Probenübertragung von einem Kryosubstrat auf ein oder mehrere Zielsubstrate operatorunabhängig und automatisch durchgeführt werden.

Weitere Vorteile und Einzelheiten der Erfindung werden aus den im folgenden unter Bezug auf die beigefügten Zeichnungen beschriebenen Ausführungsbeispielen ersichtlich. Es zeigen:
- Fig. 1: eine schematische Übersichtsdarstellung einer erfindungsgemäßen Vorrichtung zur Probenaufnahme an Kryosubstraten,
- Fig. 2: ein erfindungsgemäßes Kryosubstrat mit mechanisch abtrennbaren Ablageelementen,
- Fig. 3: eine vergößerte Perspektivdarstellung eines Ablageelements gemäß Fig. 2,
- Fig. 4: eine Illustration der Übertragung einzelner Proben von einem Kryosubstrat entsprechend einer Ausführungsform des erfindungsgemäßen Verfahrens,
- Fig. 5: ein weiteres erfindungsgemäßes Kryosubstrat mit mechanisch abtrennbaren Ablageelementen,
- Fig. 6: eine vergrößerte Perspektivansicht von vier Ablageelementen gemäß Fig. 5,
- Fig. 7: ein weiteres erfindungsgemäßes Kryosubstrat, das zur simultanen Abtrennung einer Vielzahl von Proben ausgebildet ist,
- Fig. 8: ein weiteres erfindungsgemäßes Kryosubstrat in Form einer flexiblen Folie,
- Fig. 9: ein weiteres erfindungsgemäßes Kryosubstrat, das zur thermischen Probenabtrennung ausgebildet ist,
- Fig. 10: eine vergrößerte Darstellung eines Heizelements gemäß Fig. 9,
- Fig. 11: eine Illustration einer weiteren Ausführungsform der erfindungsgemäßen Verfahrensweise bei Verwendung des Kryosubstrats gemäß Fig. 9,
- Fig. 12: eine schematische Schnittansicht einer weiteren Ausführungsform eines erfindungsgemäßen Kryosubstrats mit thermischer Abtrennung von Ablageelementen,
- Fign. 13, 14: weitere Oberflächenstrukturierungen an Kryosubstraten,
- Fig. 15: eine schematische Schnittansicht eines erfindungsgemäßen Kryosubstrats mit einzeln beweglichen Ablageelementen,
- Fig. 16: Oberflächenstrukturen zur Beeinflussung der Haftfähigkeit der Proben an Kryosubstraten, und
- Fig. 17: eine Illustration einer weiteren Verfahrensweise zur erfindungsgemäßen Probenaufnahme.

Die Erfindung wird im folgenden unter Bezug auf die Handhabung von Proben beschrieben, die beispielhaft aus einer oder mehreren biologischen Zellen mit einem Umhüllungslösungstropfen bestehen und bei der Temperatur des flüssigen Stickstoffs kryokonserviert worden sind. Die Erfindung ist in entsprechender Weise mit den oben genannten weiteren Probenmaterialien implementierbar. Eine Beschränkung auf einen bestimmten Temperaturbereich oder ein bestimmtes Temperaturregime beim Einfrieren, Lagern und Auftauen der Proben ist nicht gegeben. Einzelheiten dieser Prozeduren sind an sich bekannt und können vom Fachmann anwendungsabhängig realisiert werden.

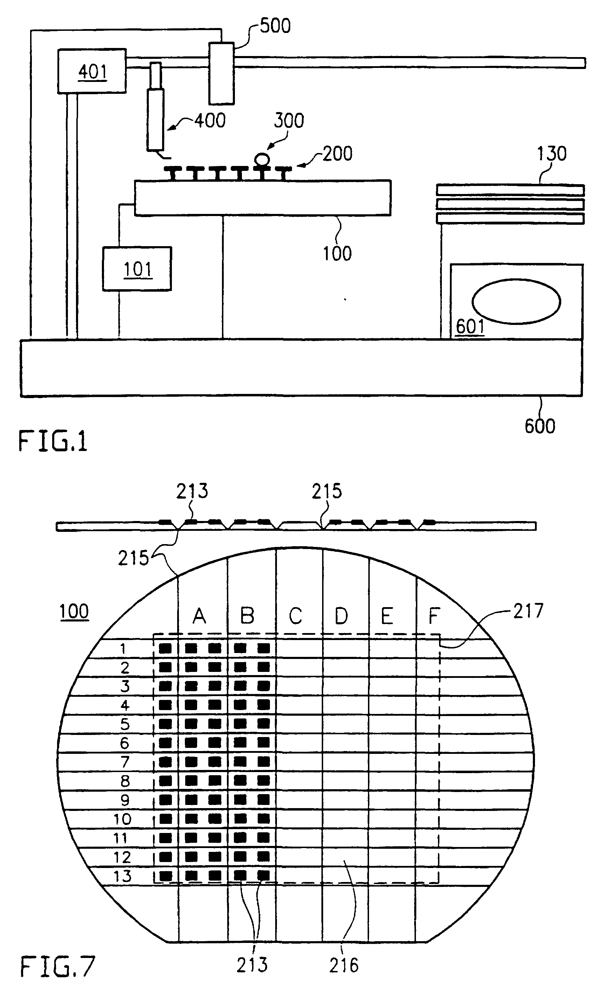

Fig. 1 ist eine schematische Übersichtsdarstellung einer erfindungsgemäßen Vorrichtung zur Probenaufnahme an einem Kryosubstrat. Die Vorrichtung umfaßt im einzelnen das Kryosubstrat 100 mit einer Vielzahl von Ablageelementen 200, die jeweils für eine kryofixierte Lagerung einer Probe 300 ausgelegt sind, eine Abtrenneinrichtung 400, eine Bildaufnahmeeinrichtung 500 und ein Steuerungssystem 600. Das Kryosubstrat 100, dessen Gestaltungsformen im einzelnen unten erläutert werden, ist mit einem Kühl- bzw. Heizaggregat 101 in an sich bekannter Weise temperierbar und gegebenenfalls mit einem (nicht dargestellten) Mechanismus in eine Lagerungseinrichtung beweglich angeordnet. Die Abtrenneinrichtung 400 ist zum mechanischen oder thermischen Abtrennen von Proben vom Kryosubstrat 100 und zur Übertragung der abgetrennten Proben auf ein oder mehrere Zielsubstrate 130 ausgelegt. Zur Bewegung der Abtrenneinrichtung 400 ist eine Antriebseinheit 401 vorgesehen. Anwendungsabhängig kann die Abtrenneinrichtung 400 jedoch auch manuell betätigt werden. Die Bereitstellung der Antriebseinheit 401 ist ein fakultatives Merkmal der Erfindung, das jedoch insbesondere bei automatisierten Probenaufnahmevorgängen am Kryosubstrat mit Vorteil implementiert wird. Die Bildaufnahmeeinrichtung 500 ist zur Aufnahme einer Abbildung der Oberfläche des Kryosubstrats 100 ausgebildet. Im Steuersystem 600 ist eine an sich bekannte Bildauswertung vorgesehen, mit der das aufgenommene Oberflächenbild in Bezug auf die Positionen der aufzunehmenden Proben ausgewertet wird. In Abhängigkeit von den ermittelten Probenpositionen kann dann die Ansteuerung der Antriebseinheit 401 erfolgen. Die Steuereinheit 600 ist ferner mit dem Kühl- bzw. Heizaggregat 101, dem Kryosubstrat 100 (bei thermischer Probenabtrennung), einem Display 601 und gegebenenfalls mit den Zielsubstraten 130 verbunden. Anstelle oder zusätzlich zur Bildaufnahmeeinrichtung 500 kann ein Beobachtungssystem, z.B. ein Mikroskop, zur visuellen Betrachtung der Substratoberfläche vorgesehen sein.

Gemäß einer bevorzugten Ausführungsform der Erfindung ist mindestens eine Abtrenneinrichtung wie ein Pipetten- oder Nadelkopf eines Picking-Roboters über dem Kryosubstrat verfahrbar und an den gewünschten Probenpositionen betätigbar. Es können auch eine Vielzahl von Abtrenneinrichtungen matrixartig wie eine Pipettenmatrix bei einem Picking-Roboter angeordnet und betätigt werden.

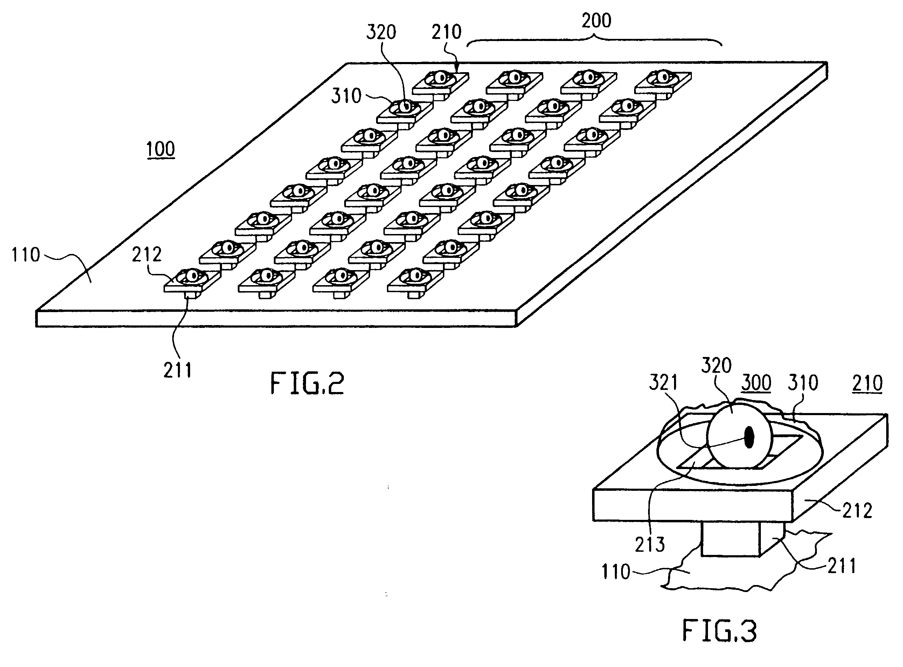

Eine erste Ausführungsform des erfindungsgemäßen Kryosubstrats 100 ist vergrößert in schematischer Perspektivansicht in Fig. 2 dargestellt. Das Kryosubstrat 100 umfaßt einen Substratkörper 110 mit einer durch die Ablageelemente 200 gebildeten Oberflächenstrukturierung. Der Substratkörper 110 bildet einen starren, ebenen Körper und besteht aus Kunststoff (z.B. PMMA), Keramik (z.B. Aluminiumoxid und andere Sinterkeramiken), Metall (z.B. Titan, Silber) oder einem Halbleitermaterial (z.B. Silizium). Keramik und Halbleitermaterialien besitzen den Vorteil guter thermischer Eigenschaften, wobei insbesondere für eine effektive Kühlung eine hohe Wärmeleitfähigkeit angestrebt wird.

Die Ablageelemente 200 sind matrixartig reihen- und spaltenweise angeordnet. Anwendungsabhängig sind abgewandelte Geometrien der Anordnung (z.B. kreisförmig, gruppenweise oder dgl.) implementierbar. Bei der dargestellten Ausführungsform werden die Ablageelemente 200 durch Ablageplatten 210 gebildet. Einzelheiten einer Ablageplatte 210 sind in Fig. 3 illustriert.

Die Ablageplatten besitzen die Gestalt eines Stempels oder Pilzes und umfaßt einen vom Substratkörper 110 ausgehenden Träger 211 geringen Querschnitts, der auf seiner vom Substratkörper 210 abgewandten Seite ein Ablageplättchen 212 größeren Querschnitts trägt. Das Ablageplättchen 212 besitzt eine mittig angeordnete Ausnehmung 213 zur Aufnahme der Probe 300, die im dargestellten Beispiel einen gefrorenen Umhüllungslösungstropfen 310 mit einer Zelle 320 umfaßt. Das Bezugszeichen 321 bezieht sich auf den schematisch illustrierten Zellkern der Zelle 320.

Die Gestalt und Dimensionen der Ablageplatte 210 werden anwendungsabhängig, insbesondere unter Berücksichtigung der Gestalt der Abtrenneinrichtung (s. unten) gewählt. Der Träger 211 wird mit einem derart geringen Querschnitt ausgeführt, daß er beim erfindungsgemäßen Abtrennen der Probe 300 vom Kryosubstrat eine mechanische Sollbruchstelle bildet. Demgegenüber wird das Ablageplättchen 212 dicker und breiter ausgeführt, so daß beim Trennen des Trägers 211 keine Beschädigung des Ablageplättchens 212 erfolgt.

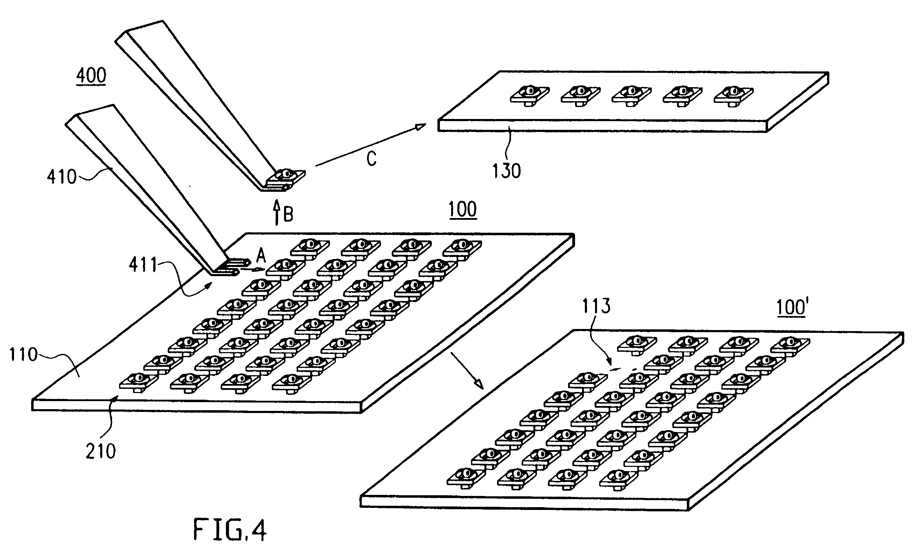

Das Ablageplättchen besitzt bei Verwendung einer gabelförmigen Abtrenneinrichtung (s. Fig. 4) vorzugsweise die dargestellte rechteckige Form. Es kann aber auch eine runde Form vorgesehen sein, insbesondere falls eine kapillarförmige Abtrenneinrichtung zur Probenaufnahme verwendet wird.

Die Ablageelemente 200 werden vorzugsweise einstückig mit dem Substratkörper 110 durch ein geeignetes Strukturierungsverfahren ausgebildet. Bei einem Kryosubstrat auf Siliziumbasis wird dabei beispielsweise wie folgt vorgegangen. Zunächst wird der Substratkörper 110 mit einer Dicke von rd. 0.1 mm bis 1.5 mm, z.B. auf der Basis eines Wafer-Materials, gebildet und mit einer SiO₂-Schicht (Dicke rd. 0.1 µm bis 5 µm) versehen. Diese SiO₂-Schicht wird entsprechend den beabsichtigten Abständen der Ablageplättchen 212 (s. Fig. 2) selektiv geätzt, so daß das Si-Material des Substratkörpers 110 entsprechend der Reihen- und Spaltenform zwischen den Ablageelementen 200 freiliegt. In diesen freiliegenden Bereichen erfolgt ein Unterätzen der Deckschicht, so daß sich die dargestellte Stempelform ausbildet.

In Fig. 4 ist die erfindungsgemäße Probenaufnahme vom Kryosubstrat 100 schematisch illustriert. Die ausschnittsweise dargestellte Abtrenneinrichtung 400 besitzt an ihrem zum Kryosubstrat 100 weisenden Ende einen Ausleger 410 mit einem gabelförmigen Trennwerkzeug 411. Die Abtrenneinrichtung 400 kann manuell oder mit der Antriebseinheit 401 (s. Fig. 1) in Bezug auf das Kryosubstrat 100 in allen drei Raumrichtungen verfahren werden. Der Ausleger 410 ist senkrecht oder schräg zur Substratoberfläche ausgerichtet. Das Trennwerkzeug 411 erstreckt sich im wesentlichen parallel zur Substratoberfläche und umfaßt zwei zinkenartige Vorsprünge, die dazu ausgebildet sind, jeweils eine Ablageplatte 210 zu untergreifen und bei Ausübung einer bestimmten Zug- oder Scherkraft vom Substratkörper 110 abzutrennen (abzubrechen). Die Abtrennkraft kann wie dargestellt durch eine mechanische Hebelkraft oder alternativ auch durch Ausübung eines Unterdrucks auf das jeweilige Ablageelement, z.B. mit einer Mikropipette, erzeugt werden.

Im einzelnen erfolgt die Probenaufnahme mit den Schritten Anfahren der Abtrennvorrichtung 400 an die gewünschte Substratposition (Pfeil A), Abbrechen oder Abtrennen der Ablageplatte 210 (Pfeil B), Übertragung der aufgenommenen Proben (mit dem Ablageelement) zum Zielsubstrat 130 (Pfeil C) und Lagerung und/oder weitere Manipulierung der Probe auf dem Zielsubstrat 130. Im Kryosubstrat 100' ergibt sich entsprechend der entnommenen Probe eine Lücke 113.

Damit die Probe 300 bei der Übertragung im kryokonservierten Zustand bleibt, kann vorgesehen sein, daß die Abtrenneinrichtung 400 selbst gekühlt ist und/oder die Übertragung unter Aufblasen eines kalten Stickstoffstroms erfolgt. Bei einer abgewandelten (nicht dargestellten) Gestaltung der Abtrenneinrichtung 400 besitzt diese ein hülsenförmiges Trennwerkzeug (z.B. Spitze einer Mikropipette), das von oben über die gewünschte Ablageplatte 210 fährt und diese durch eine geringfügige Scherbewegung abbricht.

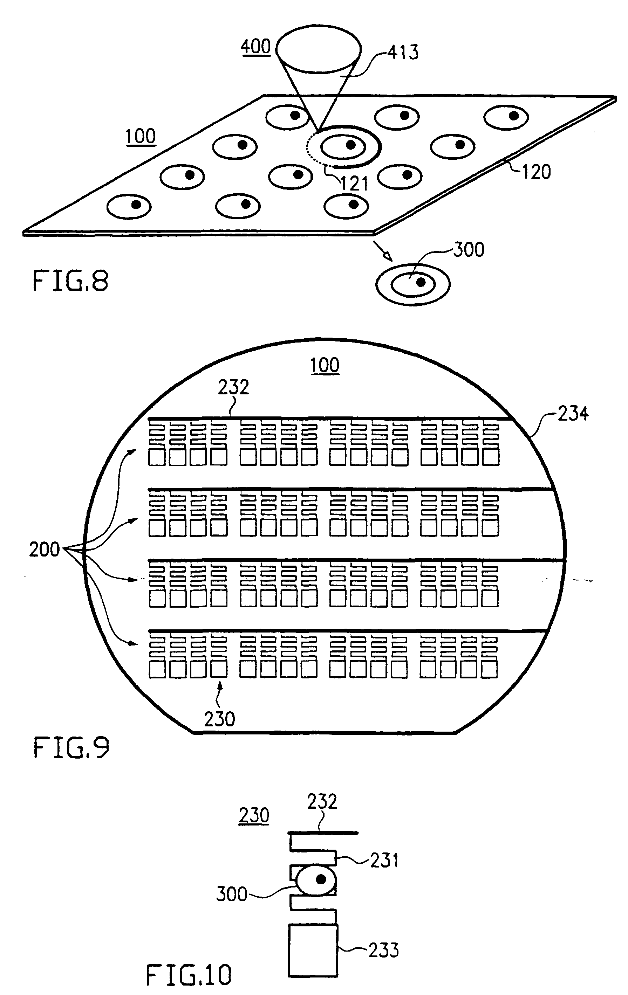

Eine Abwandlung der in den Fign. 2 bis 4 erläuterten Aufnahme von Proben mit Teilen des Kryosubstrats ist durch die folgende, nicht dargestellte Gestaltung gegeben. Die funktionell strukturierte Oberfläche des Kryosubstrats weist als Ablageelemente linien- oder matrixartig angeordnete Kunststoffolienstücke auf, die jeweils wie ein Klebestreifen flächig auf den Substratkörper aufgeklebt sind. Die Folienstücke besitzen eine anwendungsabhängig gewählte Größe wie beispielsweise die Ablageplatten 210 gemäß Fig. 2. Zur Probenaufnahme wird ein geeignetes Abstreifwerkzeug mit einer Schneide oder Klinge verwendet, die das gewünschte Folienstück am Rand untergreift und mit der Probe vom Kryosubstrat abzieht. Die Folie ist mit einem geeigneten Klebstoff auf den Substratkörper geklebt. Ein adhärentes Anhaften der Folie ohne einen Klebstoff ist aber auch möglich. Alternativ kann auch der gesamte Substratkörper mit einer flächigen Folie bedeckt sein, von der zur selektiven Probenaufnahme einzelne Stücke ausgeschnitten werden, wie dies unter Bezug auf Fig. 8 erläutert wird.

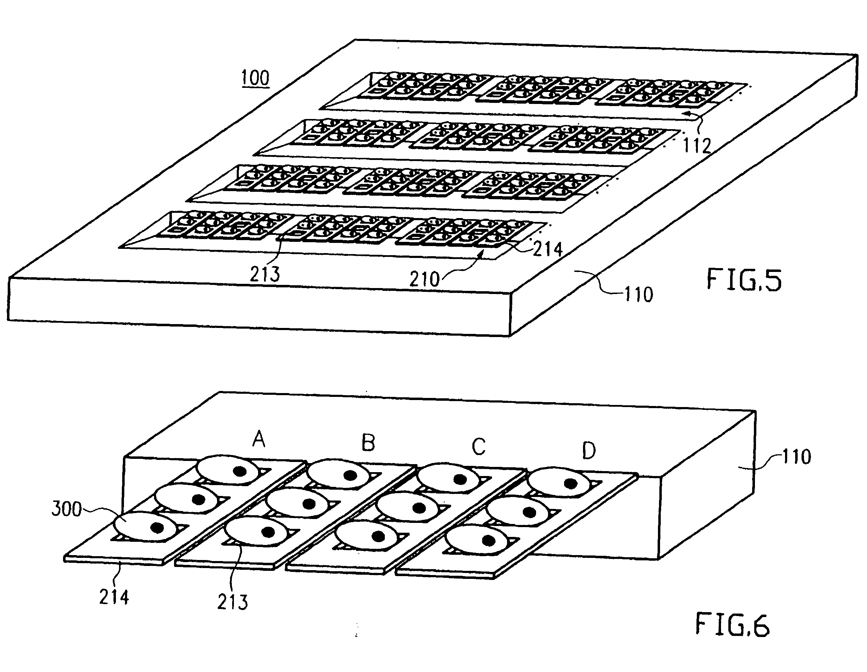

Fig. 5 illustriert eine weitere Ausführungsform eines erfindungsgemäßen Kryosubstrats 100 mit einem oberflächenstrukturierten Substratkörper 110, in dessen Oberfläche derart reihenweise Ausnehmungen 112 mit keilförmigem Querschnitt einge- bzw. unterätzt sind, daß als Ablageplatten 210 freitragende Ablagezungen 214 gebildet werden. Jede Ablagezunge ist zur Aufnahme von einer oder (wie dargestellt) mehreren Proben 300 ausgebildet. Eine vergrößerte Darstellung der Ablagezungen 214 ist in Fig. 6 dargestellt. Jede Ablagezunge ist jeweils mit drei Ausnehmungen 213 strukturiert, in denen jeweils eine Zellprobe 320 angeordnet ist.

Die Ablagezungen 214 besitzen an ihrem zum Substratkörper 110 weisenden Ende eine Sollbruchstelle, an der wiederum die Abtrennung bei Einsatz eines geeigneten Werkzeugs erfolgt. Die Abtrenneinrichtung ist in diesem Fall vorzugsweise wiederum mit einem gabelförmigen Trennwerkzeug oder auch mit einem Greif- oder Klemmwerkzeug oder einer Saugeinrichtung zur Aufnahme der Ablagezungen 214 ausgestattet.

Die Herstellung eines Kryosubstrats entsprechend der in den Fign. 5 und 6 illustrierten Ausführungsform erfolgt bei Einsatz von Halbleitermaterial wiederum vorzugsweise durch anisotropes Ätzen der Ausnehmungen 112 (Unterätzen der Ablagezungen 214).

Die Buchstaben A-D in Fig. 6 weisen auf eine Markierungsmöglichkeit für die einzelnen Ablageelemente des Kryosubstrats hin. Die Markierung erleichtert die Orientierung des Operators bei der Betrachtung des Kryosubstrats durch ein Mikroskop und gegebenenfalls auch eine Abbildungsauswertung in dem Steuersystem 600 (s. Fig. 1).

Die gruppenweise Aufnahme jeweils einer Probe oder einer Mehrzahl von Proben von einem Kryosubstrat 100 ist in Fig. 7 in schematischer Seitenansicht (oberer Teil der Abbildung) und Draufsicht (unterer Teil der Abbildung) illustriert. Das Kryosubstrat 100, z.B. in Form eines Wafers trägt auf seiner Oberfläche eine Strukturierung in Form linienhafter Verjüngungen 215, die die Substratoberfläche in reihen- und spaltenweise angeordnete Segmente 216 unterteilen. Wiederum bilden die Verjüngungen 215 Sollbruchstellen, die ein selektives Abtrennen von einzelnen Proben oder Probengruppen in Reihen- oder Spaltenanordnung erlauben. Die schwarz ausgefüllten Flächen illustrieren schematisch Vertiefungen 213 entsprechend den obengenannten Vertiefungen 213 der Ablageplättchen 212 bzw. der Ablagezungen 214. Jede Vertiefung 213 ist wiederum zur Aufnahme einer Probe im kryokonservierten Zustand vorgesehen.

Die Ausbildung der Verjüngungen 215 erfolgt je nach Substratmaterial durch ein geeignetes Strukturierungsverfahren, z.B. durch Ätzen, Fräsen oder dgl. Das Bezugszeichen 217 bezieht sich auf einen schematisch eingezeichneten Bereich, der für die Kryokonservierung auf dem Kryosubstrat 100 verwendet wird.

Eine weitere Ausführungsform, bei der ein mechanisches Abtrennen eines Substratteiles vorgesehen ist, auf dem eine Probe abgelegt ist, wird in Fig. 8 illustriert. Das Kryosubstrat 100 wird durch eine Substratfolie 120 gebildet. Die (nicht dargestellte) Oberflächenstrukturierung der Substratfolie 120 umfaßt an jeder vorgesehenen Probenposition eine kreis- oder rahmenförmige Trennlinie, an der ein bevorzugtes Durchtrennen der Substratfolie 120 erfolgt, und/oder ein gitterförmiges Markierungsnetz durch Aufdruck von Probenpositionen. Bei dieser Gestaltung ist zur erfindungsgemäßen Probenaufnahme vorgesehen, mit der Abtrenneinrichtung 400 die Substratfolie 120 um die gewünschte Probe herum zu trennen und die Probe mit dem Ausschnitt der Substratfolie zum Zielsubstrat zu übertragen. Die Abtrenneinrichtung 400 ist eine Schneideinrichtung oder, wie beispielhaft dargestellt, ein optisches Mittel in Form eines auf die Substratfolie 120 fokussierten Laserstrahls 413. Der Laserstrahl 413 erlaubt wie eine mechanische Schneideinrichtung ein Durchtrennen des Substrats entlang der Schnittlinie 121. Das ausgeschnittene Substratteil wird mit einem Aufnehmer, z.B. mit einer mit einem Unterdruck beaufschlagten Mikropipette, aufgenommen und zum Zielsubstrat übertragen.

Im folgenden wird unter Bezug auf die Fign. 9 bis 14 ein Ausführungsformen der erfindungsgemäßen Probenaufnahme beschrieben, bei der eine thermische Abtrennung der gewünschten Proben (gegebenenfalls mit Teilen des Substrats) erfolgt. Dabei sind verschiedene Gestaltungen vorgesehen, die es erlauben, die Proben in tiefgefrorenem Zustand oder auch im aufgetauten Zustand aufzunehmen.

Bei der Ausführungsform gemäß Fig. 9 trägt das Kryosubstrat 100 Ablageelemente 200 in Form einer Vielzahl von reihen- und spaltenweise angeordneten Heizelementen 230, die jeweils einen Heizbereich 231, einen für alle Heizelemente 230 gemeinsam ausgeführten Masseanschluß 232 und einen Steueranschluß 233 aufweisen. Der Heizbereich 231, der Masseanschluß 232 und der Steueranschluß 233 sind in Fig. 10 vergrößert dargestellt. Diese Komponenten bilden auf der Oberfläche der Kryosubstrats 100 wiederum eine funktionelle Strukturierung, bei der eine Probenablage an bestimmen Probenpositionen entsprechend der Lage der Heizbereiche 231 und eine thermische Probenabtrennung bei elektrischem Stromfluß durch das jeweilige Heizelemente 230 vorgesehen sind. Das Substratmaterial besteht beispielsweise aus Kunststoff oder Keramik. Die Heizelemente 230 können aus jedem geeigneten, vorzugsweise inerten leitfähigen Material (z.B. Platin) gebildet sein. Die reihenweise Massenanschlüsse 232 sind vorzugsweise über eine das gesamte Kryosubstrat 100 umgebende Masseleitung 234 elektrisch miteinander verbunden.

Jedes der Heizelemente 230 besitzt wiederum charakteristische Dimensionen im cm- bis mm-Bereich, kann aber auch wesentlich kleiner bis in den µm-Bereich ausgeführt sein. Der jeweilige Heizbereich 231 wird durch einen schmalen, vorzugsweise mäanderförmigen Leiterstreifen gebildet, der sich bei Stromdurchfluß zwischen dem Steueranschluß 233 und dem Masseanschluß 232 erwärmt. Der Steueranschluß 233 ist als Tastpad ausgeführt, das durch Aufsetzen einer beweglichen Elektrode (s. unten) mit einer Spannung zur Erzielung des gewünschten Heizstroms durch den Heizbereich 211 beaufschlagbar ist.

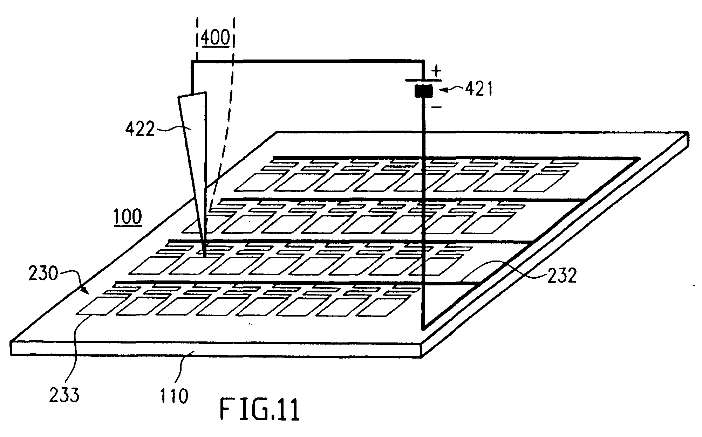

Die selektive thermische Probenabtrennung ist auch in der schematischen Perspektivansicht gemäß Fig. 11 illustriert. Fig. 11 zeigt wiederum das Substrat 100 mit dem Substratkörper 110, der die reihen- und spaltenweise angeordneten Heizelemente 230 trägt. Die Masseanschlüsse 232 sind sämtlich mit dem Minus-Pol einer Heizstromquelle 421 verbunden. Der Plus-Pol der Heizstromquelle 421 ist mit einer Tastelektrode 422 der im übrigen nur schematisch gestrichelt dargestellten Abtrenneinrichtung 420 zur positionsselektiven thermischen Freigabe von Proben vom Kryosubstrat 100 verbunden. Die Tastelektrode 422 ist mit der Abtrenneinrichtung 420 oder getrennt von dieser in Bezug auf das Kryosubstrat 100 beweglich. Das Aufsetzen der Tastelektrode 422 auf jeweils einen Steueranschluß 234 eines Heizelements 230 liefert einen Stromfluß und damit eine Erwärmung des Heizbereiches 231, so daß die auf dem Heizbereich 231 positionierte Probe (nicht dargestellt) vom Substrat her teilweise oder vollständig auftaut und mit der Abtrenneinrichtung 420 aufgenommen werden kann. Diese besitzt vorzugsweise die Gestalt einer Mikropipette.

Das in Fig. 11 illustrierte Tastprinzip kann wie folgt modifiziert werden. Es kann vorgesehen sein, daß anstelle der einzelnen Tastspitze 422 eine Gruppe von Tastspitzen zur Freigabe einer Gruppen von Proben entsprechend einem vorbestimmten Muster aufgesetzt wird. Ferner kann anstelle des Tastprinzips ein Steckerprinzip realisiert werden. Es ist auch möglich, für jede Heizelementreihe einen gemeinsamen, von den Anschlüssen der übrigen Reihen getrennten Massenanschluß und für jede Heizelementspalte einen gemeinsamen, von den Anschlüssen der übrigen Spalten getrennten Steueranschluß vorzusehen. Bei dieser Gestaltung erfolgt die Probenfreigabe derart, daß mit einer Steuereinrichtung die Heizstromquelle 421 mit einem Reihen-Spalten-Paar verbunden wird, dessen Kreuzungspunkt gerade der Position der gewünschten Probe entspricht.

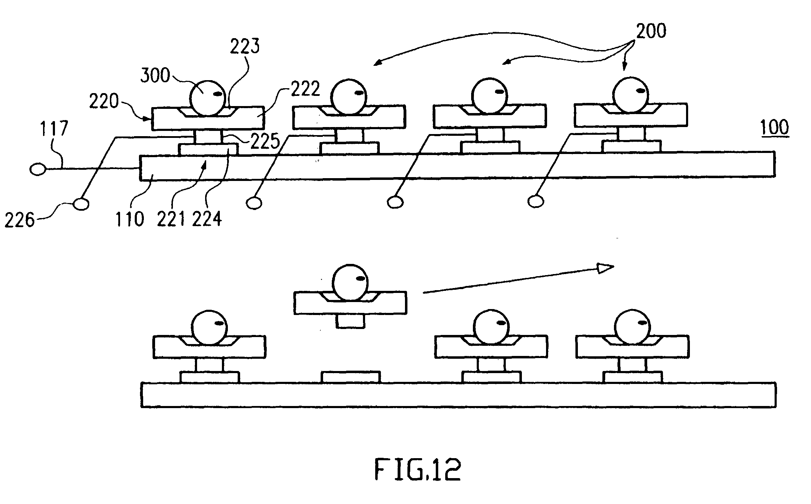

Fig. 12 stellt eine abgewandelte Ausführungsform der erfindungsgemäßen thermischen Probenaufnahme dar, bei der jeweils mit der Probe auch ein Teil des Ablageelements vom Kryosubstrat getrennt wird. Das Kryosubstrat 100 umfaßt den Substratkörper 110 und als Oberflächenstrukturierung die Ablageelemente 200 in Form von elektrisch ablösbaren Ablageplatten 220. Jede Ablageplatte 220 umfaßt einen Träger 221 und ein Ablageplättchen 222. Das Ablageplättchen 222 ist wie bei den oben beschriebenen Ausführungsformen mit einer Ausnehmung 223 zur Aufnahme der Probe 300 versehen. Jeder Träger 221 umfaßt ein Trennelement 224 und ein Anschlußelement 225, das durch das Trennelement 224 vom Substratkörper 110 getrennt ist. Das Trennelement 224 besteht beispielsweise aus elektrisch leitfähigen Bauteilen, das bei Erwärmung infolge Stromdurchfluß schmilzt oder sich zersetzt oder zumindest eine Abtrennung des Ablageplättchens 222 vom Substratkörper 110 erlaubt.

Der Substratkörper 110 besteht vollständig oder teilweise aus Metall und ist mit einem elektrischen Anschluß 117 versehen, der substratseitig mit sämtlichen Trennelementen 224 elektrisch verbunden ist. Jedes Anschlußelement 225 ist mit einem eigenen elektrischen Steueranschluß 226 versehen. Wird nun ein Anschlußpaar 117, 226 eines bestimmten Ablageelements 220 mit einer Spannung beaufschlagt, so bewirkt der Stromfluß durch das Trennelement 224 dessen Schmelze oder Erweichung, so daß das betroffene Ablageelement 200 mit einem geeigneten Werkzeug (s. beispielsweise Fig. 4) aufgenommen und zum Zielsubstrat transportiert werden kann. Dieses ist im unteren Teil von Fig. 12 illustriert.

Das Trennelement 224 besteht vorzugsweise aus einem sich durch den Stromfluß veränderndes (z.B. auflösendes) Material, wie z.B. ein unedles Metall (Aluminium oder dgl.), ein Gel etc. und besitzt eine Dicke von weniger als 0.5 mm.

Der Vorteil der Anordnung gemäß Fig. 12 besteht darin, daß trotz der thermischen Probenaufnahme die Probe 300 im kryokonservierten Zustand verbleiben kann.

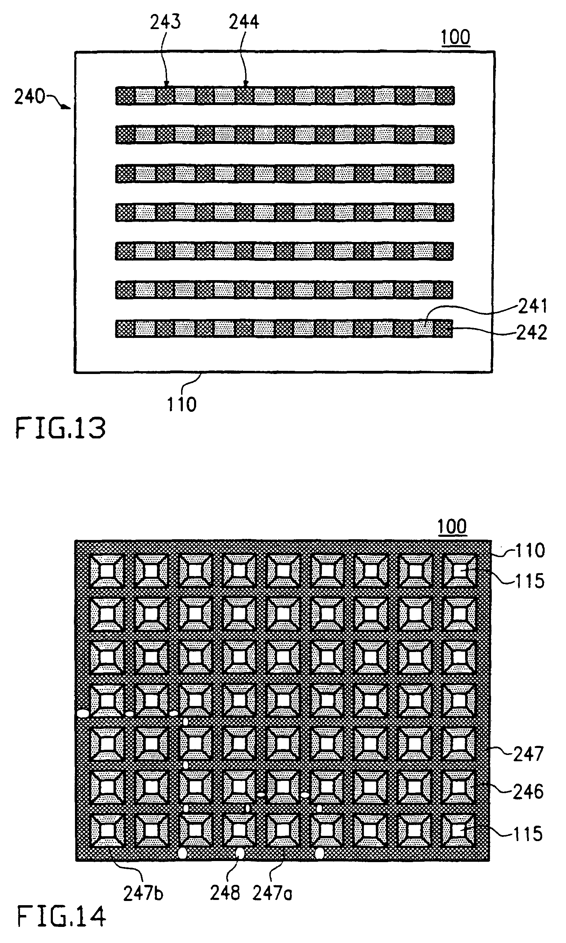

Abwandlungen eines funktionellen Kryosubstrats mit oberflächenintegrierten, entsprechend den Probenpositionen einzeln ansteuerbaren Heizelementen sind in den Fign. 13 und 14 in schematischer Draufsicht illustriert. Gemäß Fig. 13 trägt der Substratkörper 110 des Kryosubstrats 100 gerade Elektrodenstreifen 240, die abwechselnd Bereiche verminderter elektrischer Leitfähigkeit 241 und Bereiche erhöhter elektrischer Leitfähigkeit 242 umfassen. Die Elektrodenstreifen besitzen eine charakteristische Breite, die der typischen Querdimension der Ablagefläche der kryokonservierten Proben entspricht. Die Proben 300 sind in den Bereichen 241 verminderter elektrischer Leitfähigkeit angeordnet. Die Bereiche erhöhter elektrischer Leitfähigkeit 242 hingegen bilden Tastanschlüsse bzw. Einspeisungspunkte für einen Heizstrom.

Mit zwei beweglichen Tastspitzen analog zu der Tastelektrode 422 in Fig. 10 oder mit einer geeigneten Leitungsbeschaltung ist zur erfindungsgemäßen Probenaufnahme vorgesehen, jeweils zwei Bereiche erhöhter elektrischer Leitfähigkeit 242 mit einer Heizspannung zu beaufschlagen. Der Stromfluß zwischen den beiden angesteuerten Bereichen liefert eine Erwärmung im Bereich verminderter elektrischer Leitfähigkeit 241 zwischen den angesteuerten Bereichen 242, so daß die dort gelegene Probe freigegeben wird. Dabei können auch mehrere Probenbereiche eingeschlossen werden, wie dies durch die Pfeile 243, 244 illustriert ist, die zwei elektrische Tastelektroden darstellen, die jeweils mit den Anschlüssen einer Heizstromquelle verbunden sind. Damit ermöglicht die Streifengestaltung gemäß Fig. 13 auch die Freigabe von reihenweise angeordneten Probengruppen. Die Probenaufnahme erfolgt dann wiederum mit einem geeigneten Werkzeug, wie beispielsweise einer Mikropipette oder einer Picking-Nadel, an deren Spitze die Probe anhaftet.

Fig. 14 zeigt eine Abwandlung des dargestellten Prinzips der Ablage der Proben auf Substratbereichen geringerer elektrischer Leitfähigkeit, die elektrisch mit benachbarten Bereichen erhöhter elektrischer Leitfähigkeit verbunden sind, am Beispiel eines Kryosubstrats 100 mit einer Vielzahl von Durchbrüchen 115 im Substratkörper 100. Die Positionen der Durchbrüche entsprechen den gewünschten Probenablagepositionen. Die Durchbrüche 115 besitzen einen im Vergleich zu den charakteristischen Querschnittsdimensionen der abzulegenden Proben geringeren Durchmessers (z.B. zur Ablage biologischer Zellen geringer als 100 µm). Auf beiden Seiten des Substratkörpers 100 sind die Durchbrüche 115 mit einer Beschichtung versehen, die einen Bereich verminderter elektrischer Leitfähigkeit 246 bildet. Die Beschichtungen auf beiden Substratseiten sind elektrisch miteinander verbunden. Im übrigen ist der Substratkörper 100 auf beiden Seiten des Substrats mit einer Beschichtung versehen, die einen oder mehrere Bereiche erhöhter elektrischer Leitfähigkeit 247 bildet. Die Bereiche 247 erlauben eine Ansteuerung einzelner Ablagepositionen (247a) oder von Probengruppen (247b). Hierzu wird die elektrisch leitfähige, vorzugsweise metallische Beschichtung zur Bildung der Bereiche 247 an den gewünschten Positionen (z.B. bei 248) anwendungsabhängig durchtrennt (Anbringung von schlitzförmigen Unterbrechungen o. dgl.).

Durch Beaufschlagung der auf der Substratrückseite durchgehenden Beschichtung hoher Leitfähigkeit einerseits und des gewünschten Bereiches 247 entsprechend einer vorbestimmten Probe mit einer elektrischen Heizspannung fließt über die sich erwärmenden Bereiche 246 der gewünschte Heizstrom, der ein zumindest teilweise Antauen der Probe und damit deren Freigabe bewirkt.

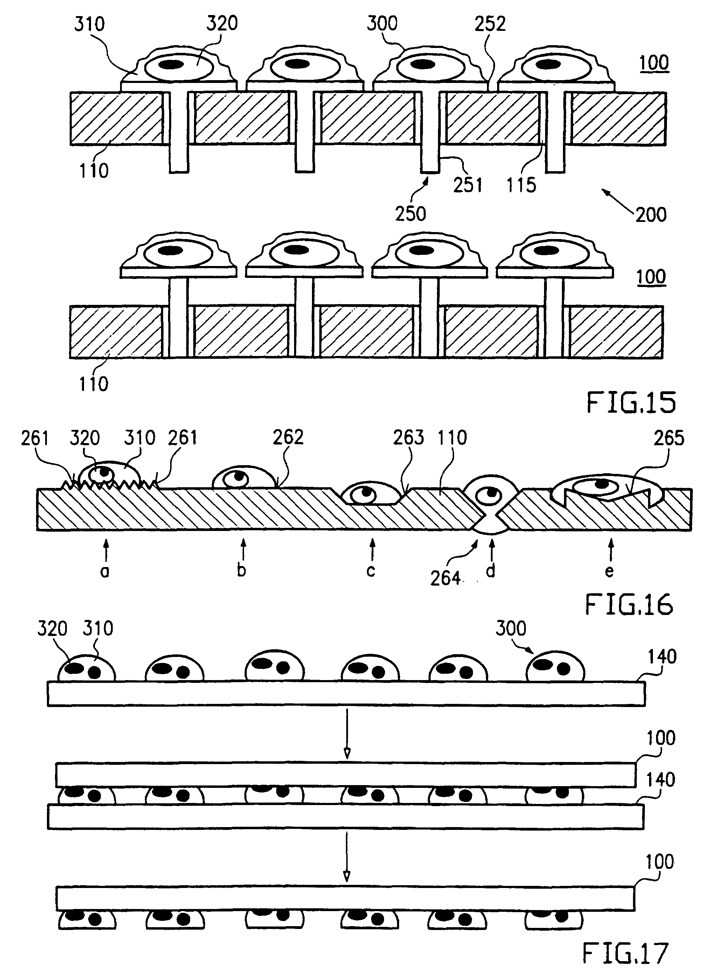

Eine weitere Ausführungsform eines funktionell strukturierten Kryosubstrats 100 zur selektiven Probenentnahme ist vergrößert in schematischer Seitenansicht in Fig. 15 dargestellt. Der Substratkörper 110 des Kryosubstrats weist eine Vielzahl von Duchbrüchen 115 auf, die entsprechend der gewünschten Probenablage z.B. matrixartig reihen- und spaltenweise angeordnet sind. Die Ablageelemente 200 werden bei dieser Ausführungsform durch bewegliche Ablagestößel 250 gebildet, die jeweils in einem der Durchbrüche verschiebbar angeordnet sind. Jeder Ablagestößel 250 besteht aus einem Trägerstab 251 und einem Ablageplättchen 252, das gegebenenfalls mit einer Ausnehmung (entsprechend der Ausnehmung gemäß 213 gemäß Fig. 2 oder 3) oder mit einer Oberflächenstrukturierung gemäß Fig. 16 (s. unten) versehen ist. Die Ablageplättchen 252 sind zur Aufnahme der kryokonservierten Proben 300 vorgesehen, die beim dargestellten Beispiel wiederum einen Umhüllungslösungstropfen 310 mit einer biologischen Zelle 320 umfassen.

Im Ausgangszustand bzw. im Lagerzustand des Kryosubstrats bei tiefen Temperaturen sitzen alle Ablagestößel 250 in den entsprechenden Durchbrüchen 115 derart, daß die Ablageplättchen 252 auf der Oberfläche des Substratkörpers 110 ruhen. Die Länge der Stabelemente 251 ist größer als die Dicke des Substratkörpers 110, so daß die Stabelemente 251 im Ausgangszustand auf der Unterseite des Substrats herausragen.

Zur selektiven (probenspezifischen) oder gruppenweisen Probenentnahme werden nun einzelne oder Gruppen von Ablagestößeln 250 von der Rückseite des Kryosubstrats 100 her mechanisch von der Substratebene abgehoben. Dieser Zustand ist für vier Ablagestößel im unteren Teil von Fig. 15 illustriert. Die vorgeschobenen Ablagestößel 250 können dann mit einem geeigneten Abtrenn- oder Greif-Werkzeug, wie dies beispielsweise oben unter Bezug auf Fig. 4 beschrieben wurde, abgehoben und zum Zielsubstrat übertragen werden. Dabei kann der kryokonservierte Zustand der Proben erhalten werden.

Für die verschiedenen Probenaufnahmeprozeduren an Kryosubstraten kann es vorteilhaft sein, die Proben mit einer höheren oder einer geringeren Rückhaltekraft am Kryosubstrat zu verankern. Hierzu wird das Substrat an den Probenablagepositionen strukturiert, so daß der Kontaktbereich zwischen dem Substrat und der Probe vergrößert oder modifiziert wird, um die gewünschten Rückhaltekräfte einzustellen. Beispiele für derartige Strukturen sind in Fig. 16 zusammengestellt.

Gemäß der Struktur a ist auf der Oberfläche des Substratkörpers 110 eine nano- oder mikrostrukturierte Aufrauhung 261 vorgesehen. Diese Aufrauhung 261 wird beispielsweise durch eine chemische Behandlung oder eine Laserbehandlung des Substrats erzeugt und dient der besseren Haftung der Probe 300. Entsprechend dem Teilbild b ist eine extrem glatte Oberfläche vorgesehen, die beispielsweise durch einen polierten Bereich 262 gebildet wird. Innerhalb des polierten ggf. partiell hydrophobierten Bereiches 262 kann die Probe 300 auch im tiefgefrorenen Zustand leicht verschoben oder vom Substrat abgetrennt werden. Dies erleichtert eine Positionsänderung bzw. Aufnahme der Probe am Kryosubstrat. Gemäß Teilbild c wird die Probe 300 in einer Mulde 263 abgelegt, die sowohl einer verbesserten Verankerung am Substrat als auch einem Schutz beispielsweise gegenüber den Werkzeugen bei Abtrennung benachbarter Proben dient. Die Struktur 260 des Substrats kann auch einen profilierten Durchbruch 264 gemäß Teilbild d umfassen. Der Durchbruch 264 besitzt einen geringeren Durchmesser als die in der Probe 300 enthaltene biologische Zelle 320. Da jedoch beim Einfriervorgang der Umhüllungslösungstropfen 310 den Durchbruch 264 zumindest teilweise durchdringen kann, ergibt sich eine besonders feste Verankerung der Probe im kryokonservierten Zustand. Das Teilbild e illustriert weitere Substratprofilierungen in Napf- oder Grabenform, die dazu dienen, beim Einfriervorgang die Tropfenform zu beeinflussen und/oder die Probe am Substrat fest zu verankern.

Fig. 17 zeigt eine weitere Variante einer erfindungsgemäßen Probenaufnahme an Kryosubstraten, die insbesondere zur Erzeugung von Probenmustern auf dem Kryosubstrat dient. Im obersten Bild von Fig. 17 ist ein beliebiger Probenträger 140 gezeigt, die bei Normaltemperatur (flüssiger Zustand der Proben 300) eine Vielzahl von Proben 300 trägt. Jede Probe 300 besteht beispielsweise aus einem Umhüllungslösungstropfen 310 und zwei Zellen 320. Das Probenmuster auf dem Probenträger 140 wird beispielsweise mit einem Picking-Roboter mit Hilfe von Mikropipetten erzeugt.

Nach Fertigstellung des Musters wird ein tiefgekühltes Kryosubstrat 100 auf die Proben 300 aufgesetzt (mittleres Bild in Fig. 17), so daß die Proben 300 gefrieren. Das Kryosubstrat 100 besitzt auf der zu den Proben hinweisenden Oberfläche Strukturen 260 zur Haftungsvergrößerung, wie sie beispielsweise in Fig. 16 erläutert sind. Der Probenträger 140 hingegen besitzt eine glatte, vorzugsweise polierte Oberfläche. Beim Einfriervorgang haften daher die Proben 300 stärker am Kryosubstrat 100 als am Probenträger 140 und können damit mit dem Kryosubstrat 100 abgehoben werden (unterster Teil von Fig. 17).

Das in Fig. 17 illustrierte Verfahren besitzt den Vorteil eines definierten Einfriervorgangs (Kryoprozedur) für sämtliche Proben. Außerdem besitzen die Tropfen nach dem Anhaften am Kryosubstrat eine planare Oberfläche, was insbesondere für eine mikroskopische Beobachtung von Vorteil ist.

Die oben erläuterten Ausführungsformen der erfindungsgemäßen mechanischen und/oder thermischen Probenaufnahme durch Abtrennung von einzelnen oder mehreren Proben (gegebenenfalls mit Substratteilen) vom Kryosubstrat kann anwendungsabhängig, insbesondere für bestimmte Kryosubstratformen (z.B. Zylinderoberflächen) oder für bestimmte Abtrennwerkzeugformen modifiziert werden. Es kann ferner vorgesehen sein, die erfindungsgemäße Probenaufnahme mit einem Meßverfahren zu kombinieren, bei dem die kryokonservierten Proben auf dem Kryosubstrat in Bezug auf bestimmte Eigenschaften untersucht und dann automatisch vom Kryosubstrat entnommen werden.

Ein erfindungsgemäßes Kryosubstrat kann anwendungsabhängig in Bezug auf sein Material, Form, Größe und Oberflächengestaltung an bestimmte Meßaufgaben angepaßt sein. So ist es für NMR-Untersuchungen beispielsweise vorgesehen, daß das Kryosubstrat aus einem für NMR-Untersuchungen geeigneten, inerten Material besteht und in Größe und Form an die jeweiligen verfügbaren NMR-Meßeinrichtungen angepaßt ist. Des weiteren kann eine Markierung von Kryosubstraten oder von deren Teilen, z.B. in Form von Barcodes, Farbcodes, optisch detektierbaren Mustern oder elektro-magnetischen Markierungen (Transponder) vorgesehen sein. Dies ermöglicht vorteilhafterweise eine automatische Erfassung vorbestimmter Proben an bestimmten Ablageelementen bzw. die Erfassung der spezifischen Positionen, von denen Proben aufgenommen werden sollen.

Gemäß einer weiteren Ausführungsform erfindungsgemäßer Kryosubstrate können Ablageelemente, die zur positionsspezifischen Abtrennung von Kryosubstrat ausgelegt sind, ein magnetisches Material enthalten. Magnetische Ablageelemente können einfach mit einem Magneten am Ende einer entsprechenden Aufnahmevorrichtung erfaßt und zum jeweiligen Zielsubstrat überführt werden.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Verfahren zur Probenaufnahme an einem Kryosubstrat (100), auf dem jeweils an vorbestimmten Probenpositionen eine Vielzahl kryokonservierter Proben (300) angeordnet ist,
**dadurch gekennzeichnet,**
**daß** einzelne Proben selektiv mechanisch oder thermisch vom Kryosubstrat (100) abgetrennt und zu einem Zielsubstrat (130) übertragen werden.

2. Verfahren gemäß Anspruch 1, bei dem zum mechanischen Abtrennen der Proben Ablageelemente (200), auf denen jeweils eine Probe (300) angeordnet ist, selektiv mit einer Abtrenneinrichtung (400) durch Ausübung mechanischer Zug- oder Scherkräfte vom Substratkörper (110) des Kryosubstrats (100) abgelöst und die damit jeweils aufgenommene Probe gemeinsam mit dem Ablageelement zum Zielsubstrat (130) übertragen werden.

3. Verfahren gemäß Anspruch 2, bei dem das Ablösen der Ablageelemente (200) ein Abbrechen von Ablageplatten (210), die über Sollbruchstellen mit dem Substratkörper (110) verbunden sind, oder ein Abziehen von Ablagefolien umfaßt.

4. Verfahren gemäß Anspruch 2, bei dem das Ablösen der Ablageelemente (200) ein selektives Verschieben von Ablagestößeln (250) und Aufnehmen der verschobenen Ablagestößel (250) mit einer Greifeinrichtung umfaßt.

5. Verfahren gemäß Anspruch 2, bei dem das Ablösen der Ablageelemente (200) ein selektives Ausschneiden von Ablagebereichen aus einem Foliensubstrat (120) und eine Aufnahme der ausgeschnittenen Bereiche mit einer Greifeinrichtung umfaßt.

6. Verfahren gemäß Anspruch 1, bei dem zum thermischen Abtrennen der Proben Ablageelemente (200), auf denen jeweils eine Probe (300) angeordnet ist und die durch Heizelemente (230) gebildet werden, ein selektives, zumindest teilweises Auftauen der jeweiligen Probe mit dem Heizelement (230) erfolgt.

7. Verfahren gemäß Anspruch 6, bei dem die Heizelemente (230) jeweils einen Steueranschluß (234) aufweisen und die selektive Probenaufnahme ein Aufsetzen einer Tastelektrode (422) auf den Steueranschluß (234) zur selektiven Erwärmung der entsprechenden Probe und eine Aufnahme der Probe mit einer Atrenntrenneinrichtung (400) umfaßt.

8. Verfahren gemäß Anspruch 1, bei dem zum mechanischen Abtrennen der Proben Ablageelemente (200), auf denen jeweils eine Probe (300) angeordnet ist, selektiv mit einer Abtrenneinrichtung (400) durch Ausübung einer thermischen Zersetzung vom Substratkörper (110) des Kryosubstrats (100) abgelöst und die damit jeweils aufgenommene Probe gemeinsam mit dem Ablageelement zum Zielsubstrat (130) übertragen werden.

9. Verfahren gemäß einem der vorhergehenden Ansprüche, bei dem während der selektiven Probenaufnahme das Kryosubstrat (100) im Bereich der auf dem Kryosubstrat verbleibenden Proben im gekühlten Zustand bei der Kryotemperatur verbleibt.

10. Verfahren gemäß einem der Ansprüche 2 bis 9, bei dem selektiv Probengruppen aufgenommen werden.

11. Vorrichtung zur Probenaufnahme an Kryosubstraten (100), die umfaßt:
- ein funktionell oberflächenstrukturiertes Kryosubstrat (100) mit einer Vielzahl von Ablageelementen (200) für kryokonservierte Proben (300), wobei die Ablageelemente (200) für eine selektive mechanische oder thermische Abtrennung der Proben vom Kryosubstrat (100) ausgebildet sind, und
- eine Abtrenneinrichtung (400), die zum Abtrennen und Aufnehmen der Proben (300) vom Kryosubstrat (100) ausgebildet ist.

12. Vorrichtung gemäß Anspruch 11, bei der die Ablageelemente (200) Ablageplatten (210) umfassen, die jeweils über eine Sollbruchstelle mit einem Substratkörper (110) des Kryosubstrats (100) verbunden sind.

13. Vorrichtung gemäß Anspruch 11, bei der die Ablageelemente (200) Ablagestößel (250) umfassen, die im Substratkörper (110) des Kryosubstrats (100) senkrecht zu dessen Oberfläche verschiebbar angeordnet sind.

14. Vorrichtung gemäß Anspruch 12 oder 13, bei der die Abtrenneinrichtung (400) ein gabelförmiges Trennwerkzeug (411), ein Greifwerkzeug, ein Klemmwerkzeug oder eine Saugeinrichtung aufweist.

15. Vorrichtung gemäß Anspruch 11, bei der die Ablageelemente (200) Heizelemente (230) umfassen, die zum zumindest teilweisen Auftauen der jeweils abgelegten Probe (300) ausgebildet sind.

16. Vorrichtung gemäß Anspruch 15, bei der die Heizelemente (230) jeweils einen Heizbereich (231) aufweisen, der mit einem Masseanschluß (232) und einem Steueranschluß (233) verbunden ist, wobei alle Masseanschlüsse (232) der Heizelemente (230) elektrisch miteinander verbunden und die Steueranschlüsse (233) selektiv voneinander elektrisch getrennt und zur Beaufschlagung der Heizelemente (230) mit einer Heizspannung beaufschlagbar sind.

17. Vorrichtung gemäß Anspruch 11, bei der die Ablageelemente (200) elektrisch ablösbare Ablageplatten (220) umfassen, bei denen jeweils ein Trennelement (224) vorgesehen ist, das bei Beaufschlagung mit einer elektrischen Spannung eine Abtrennung der Probe mit der Ablageplatte (220) vom Substratkörper (110) durch Schmelzen oder Zersetzung des Trennelements (224) ermöglicht.

18. Kryosubstrat (100), das einen Träger für eine Vielzahl von Proben (300) bildet, die an der Oberfläche des Kryosubstrats (100) im gefrorenen Zustand angeordnet sind,
**dadurch gekennzeichnet, daß**
die Oberfläche eine Vielzahl von Ablageelementen (200) zur Aufnahme jeweils einer Probe (300) aufweist, wobei jedes Ablageelement zur selektiven Abtrennung der jeweiligen Probe vom Kryosubstrat ausgelegt ist.

19. Kryosubstrat gemäß Anspruch 18, bei dem die Ablageelemente (200) Ablageplatten (210) umfassen, die über Sollbruchstellen mit einem Substratkörper (110) des Kryosubstrats (100) verbunden sind.

20. Kryosubstrat gemäß Anspruch 18, bei dem die Ablageelemente (200) Heizelemente (230) umfassen, die zum zumindest teilweisen Auftauen der jeweils abgelegten Probe ausgelegt sind.

21. Kryosubstrat gemäß Anspruch 18, bei dem die Ablageelemente (200) Ablagestößel (250) umfassen, die im Substratkörper (110) des Kryosubstrats (100) senkrecht zu dessen Oberfläche verschiebbar sind.

22. Kryosubstrat gemäß Anspruch 18, bei dem als Ablageelemente (200) Folienstücke vorgesehen sind, die im gekühlten Zustand des Kryosubstrats (100) vom Substratkörper (110) abziehbar sind.

23. Kryosubstrat gemäß Anspruch 18, bei dem die Ablageelemente (200) oder die Substratobefläche eine Oberflächenmodifizierung zur Beeinflussung der Probenhaftung in Form einer Oberflächenaufrauhung, einer Polierung, einer Ausnehmung, eines Durchbruchs oder eines Verankerungsgrabens umfassen.

24. Kryosubstrat gemäß Anspruch 18, bei dem die Ablageelemente (200) zumindest teilweise aus magnetischen Materialien bestehen.

25. Kryosubstrat gemäß Anspruch 18, auf dessen Oberfläche optische oder elektro-magnetische Markierungen zur Kennzeichnung des Kryosubstrats und/oder einzelner Ablageelemente auf dem Kryosubstrat vorgesehen sind.

## Claims

1. Method of picking up samples at a cryosubstrate (100), on which a plurality of cryopreserved samples (300) are arranged respectively at predetermined sample positions, **characterised in that**
individual samples are selectively separated mechanically or thermally from the cryosubstrate (100) and transferred to a target substrate (130).

2. Method according to Claim 1, wherein for the mechanical separation of the samples, storage elements (200), on which a sample (300) is respectively arranged, are selectively detached from the substrate body (110) of the cryosubstrate (100) with a separating device (400) by exerting mechanical tensile or shearing forces and the sample respectively picked up therewith is transferred together with the storage element to the target substrate (130).

3. Method according to Claim 2, wherein the detachment of the storage elements (200) comprises breaking off storage plates (210), which are joined to the substrate body (110) via predetermined breakage points, or pulling off storage foils.

4. Method according to Claim 2, wherein the detachment of the storage elements (200) comprises a selective displacement of storage rods (250) and pickup of the displaced storage rods (250) with a gripping device.

5. Method according to Claim 2, wherein the detachment of the storage elements (200) comprises selectively cutting storage areas out of a foil substrate (120) and pickup of the cut-out areas with a gripping device.

6. Method according to Claim 1, wherein for the thermal separation of the samples, storage elements (200), on which a sample (300) is respectively arranged and which are formed by heating elements (230), perform a selective, at least partial thawing of the respective sample with the heating element (230).

7. Method according to Claim 6, wherein the heating elements (230) respectively have a control connection (234), and the selective pickup of samples comprises attaching a contact electrode (422) onto the control connection (234) for selective heating of the corresponding sample and pickup of the sample with a separating device (400).

8. Method according to Claim 1, wherein for the mechanical separation of the samples, storage elements (200), on which a sample (300) is respectively arranged, are selectively detached from the substrate body (110) of the cryosubstrate (100) with a separating device (400) by performing a thermal decomposition, and the sample respectively picked up therewith is transferred together with the storage element to the target substrate (130).

9. Method according to one of the preceding claims, wherein during the selective sample pickup, the cryosubstrate (100) remains in cooled state at the cryotemperature in the area of the samples remaining on the cryosubstrate.

10. Method according to one of Claims 2 to 9, wherein sample groups are selectively picked up.

11. Device for picking up samples at cryosubstrates (100), which comprises:
- a functionally surface-structured cryosubstrate (100) with a plurality of storage elements (200) for cryopreserved samples (300), wherein the storage elements (200) are configured for a selective mechanical or thermal separation of the samples from the cryosubstrate (100), and
- a separating device (400), which is configured to separate and pickup the samples (300) from the cryosubstrate (100).

12. Device according to Claim 11, wherein the storage elements (200) comprise storage plates (210), which are joined to a substrate body (110) of the cryosubstrate (100) respectively via a predetermined breakage point.

13. Device according to Claim 11, wherein the storage elements (200) comprise storage rods (250), which are displaceably arranged in the substrate body (110) of the cryosubstrate (100) perpendicular to the surface thereof.

14. Device according to Claim 12 or 13, wherein the separating device (400) has a fork-shaped separating tool (411), a gripping tool, a clamping tool or a suction means.

15. Device according to Claim 11, wherein the storage elements (200) comprise heating elements (230), which are provided to at least partially thaw the respectively stored sample (300).

16. Device according to Claim 15, wherein the heating elements (230) respectively have a heating area (231), which is connected to an earth connection (232) and a control connection (233), all earth connections (232) of the heating elements (230) being electrically interconnected and the control connections (233) being selectively electrically isolated from one another and capable of being fed with a heating voltage for feeding the heating elements (230).

17. Device according to Claim 11, wherein the storage elements (200) comprise electrically detachable storage plates (220), in which a separating element (224) is respectively provided, which when fed with an electric voltage, allows separation of the sample with the storage plate (220) from the substrate body (110) by melting or decomposition of the separating element (224).

18. Cryosubstrate (100), which forms a support for a plurality of samples (300), which are arranged in frozen state on the surface of the cryosubstrate (100), **characterised in that** the surface has a plurality of storage elements (200) to respectively accommodate one sample (300), wherein each storage element is designed for the selective separation of the respective sample from the cryosubstrate.

19. Cryosubstrate according to Claim 18, wherein the storage elements (200) comprise storage plates (210), which are joined to a substrate body (110) of the cryosubstrate (100) via predetermined breakage points.

20. Cryosubstrate according to Claim 18, wherein the storage elements (200) comprise heating elements (230), which are provided to at least partially thaw the respectively stored sample.

21. Cryosubstrate according to Claim 18, wherein the storage elements (200) comprise storage rods (250), which are displaceable in the substrate body (110) of the cryosubstrate (100) perpendicular to the surface thereof.

22. Cryosubstrate according to Claim 18, wherein foil pieces are provided as storage elements (200), which may be pulled off from the substrate body (110) in the cooled state of the cryosubstrate (100).

23. Cryosubstrate according to Claim 18, wherein the storage elements (200) or the substrate surface comprise a surface modification to influence adhesion of the sample in the form of a surface roughening, a surface polish, a recess, a perforation or an anchorage groove.

24. Cryosubstrate according to Claim 18, wherein the storage elements (200) are made at least partially from magnetic materials.

25. Cryosubstrate according to Claim 18, on the surface of which optical or electromagnetic markings are provided for identification of the cryosubstrate and/or individual storage elements on the cryosubstrate.

## Revendications

1. Procédé de prélèvement d'échantillon sur un cryosubstrat (100), sur lequel sont disposés un certain nombre d'échantillons cryoconservés (300) en des positions déterminées d'échantillon, **caractérisé en ce que** chaque échantillon est séparé sélectivement du cryosubstrat (100), de manière mécanique ou thermique et transféré sur un substrat cible (130).

2. Procédé selon la revendication 1, dans lequel pour la séparation mécanique des échantillons, des éléments de dépôt, sur lesquels est chaque fois disposé un échantillon (300), sont détachés sélectivement avec un dispositif de séparation (400) par mise en oeuvre d'une force de traction ou d'un effort de cisaillement, depuis le corps de substrat (110) du cryosubstrat (100) et les échantillons ainsi prélevés sont transférés avec l'élément de dépôt, sur le substrat cible (130).

3. Procédé selon la revendication 2, dans lequel l'enlèvement des éléments de dépôt (200) comprend la rupture de plaques de dépôt (210), qui sont reliées au corps de substrat (110) en un point destiné à la rupture, ou le tirage de feuilles de dépôt.

4. Procédé selon la revendication 2, dans lequel l'enlèvement des éléments de dépôt (200) comprend le déplacement sélectif de chariots de dépôts (250) et le prélèvement du chariot de dépôt (250) déplacé avec un dispositif de prise.

5. Procédé selon la revendication 2, dans lequel l'enlèvement des éléments de dépôt (200) comprend la découpe sélective de zones de dépôt depuis un substrat en feuille (120) et le prélèvement de la zone coupée avec un dispositif de prise.

6. Procédé selon la revendication 1, dans lequel pour la séparation thermique des échantillons, l'élément de dépôt (200), sur lequel est disposé chaque fois, un échantillon (300) et qui est formé par des éléments chauffants (230), réalise une décongélation sélective au moins partielle de chaque échantillon avec l'élément chauffant (230).

7. Procédé selon la revendication 6, dans lequel les éléments chauffants (230) présentent chaque fois un raccord de réglage (234) et le prélèvement sélectif d'échantillon comprend la disposition d'une électrode (422) sur le raccord de réglage (234) pour le réchauffement sélectif de l'échantillon correspondant et le prélèvement de l'échantillon avec un dispositif de séparation (400).

8. Procédé selon la revendication 1, dans lequel pour la séparation mécanique des échantillons, des éléments de dépôt (200)sur lesquels est chaque fois disposé un échantillon, sont détachés sélectivement avec un dispositif de séparation (400), par mise en oeuvre d'une décomposition thermique du corps de substrat (110) du cryosubstrat (100) et les échantillons ainsi prélevés sont transférés sur le substrat cible (130) avec l'élément de dépôt.

9. Procédé selon l'une des revendications précédentes, dans lequel pendant le prélèvement sélectif d'échantillon, le cryosubstrat (110), dans la zone des échantillons restant sur le cryosubstrat, reste à l'état froid à la cryotempérature.

10. Procédé selon l'une des revendication 2 à 9, dans lequel des groupes sélectifs d'échantillon sont prélevés.

11. Dispositif de prélèvement d'échantillon sur un cryosubstrat (100), qui comprend :
- un cryosubstrat (100) à surface structurée fonctionnelle avec un certain nombre d'éléments de dépôt (200) pour les échantillons cryoconservés (300), où les éléments de dépôt (200) sont formés pour une séparation sélective mécanique ou thermique des échantillons depuis le cryosubstrat (100), et
- un dispositif de séparation (400), qui est formé pour la séparation et le prélèvement des échantillons (300) depuis le cryosubstrat (100).

12. Dispositif selon la revendication 11, dans lequel les éléments de dépôt (200) comprennent des plaques de dépôt (210), qui sont chaque fois reliées par un point destiné à la rupture, à un corps de substrat (110) du cryosubstrat (100).

13. Dispositif selon la revendication 11, dans lequel les éléments de dépôt (200) comprennent des chariots de dépôt (250), qui sont disposés de manière mobile dans le corps de substrat (110) du cryosubstrat (100), de manière perpendiculaire à sa surface.

14. Dispositif selon la revendication 12 ou 13, dans lequel le dispositif de séparation (400) présente un appareil de séparation fourchu (411), un appareil de préhension, un appareil pinceur ou un dispositif d'aspiration.

15. Dispositif selon la revendication 11, dans lequel les éléments de dépôt (200) comprennent des éléments chauffants (230), qui sont formés pour au moins partiellement dégeler chaque échantillon réceptionné (300).

16. Dispositif selon la revendication 15, dans lequel les éléments chauffants (230) présentent chaque fois, une zone chauffée (231), qui est reliée avec une borne de masse (232) et une borne de gâchette (233), où toutes les bornes de masse (232) des éléments chauffants (230) sont reliées les unes aux autres de manière électrique et les bornes de gâchette (233) sont sélectivement séparées de manière électrique et peuvent être soumises à une tension de chauffage pour l'induction des éléments chauffants (230).

17. Dispositif selon la revendication 11, dans lequel les éléments de dépôt (200) comprennent des plaques de dépôt mobiles (220), sur lesquelles est prévu chaque fois, un élément de séparation (224), qui permet une séparation de l'échantillon avec la plaque de dépôt (220) depuis le corps de substrat (110) par fusion ou décomposition de l'élément de séparation (224) lors de l'induction d'une tension électrique.

18. Cryosubstrat (110), qui forme un support pour un certain nombre d'échantillons (300), qui sont disposés sur la surface du cryosubstrat (100) à l'état congelé, **caractérisé en ce que** la surface présente un certain nombre d'éléments de dépôt (200) pour la réception de chaque fois un échantillon (300), où chaque élément de dépôt est équipé pour la séparation sélective de chaque échantillon depuis le cryosubstrat.

19. Cryosubstrat selon la revendication 18, dans lequel les éléments de dépôt (200) comprennent des plaques de dépôt (210), qui sont reliées à un corps de substrat (110) du cryosubstrat (100) par des points destinés à la rupture.

20. Cryosubstrat selon la revendication 18, dans lequel les éléments de dépôt (200) comprennent des éléments chauffants (230), qui sont équipés pour la décongélation au moins partielle de chaque échantillon réceptionné.

21. Cryosubstrat selon la revendication 18, dans lequel les éléments de dépôt (200) comprennent des chariots de dépôt (250), qui sont mobiles dans le corps de substrat (110) du cryosubstrat (100), perpendiculairement à sa surface.

22. Cryosubstrat selon la revendication 18, dans lequel comme éléments de dépôt (200), sont prévus des morceaux de feuille, qui peuvent être tirés à l'état froid du cryosubstrat (100) du corps de substrat (110).

23. Cryosubstrat selon la revendication 18, dans lequel les éléments de dépôt (200) ou la surface du substrat comprennent une modification de la surface pour influencer l'adhérence de l'échantillon sous forme d'une rugosité de surface, d'un polissage, d'une réception, d'une rupture ou d'une rigole d'ancrage.

24. Cryosubstrat selon la revendication 18, dans lequel les éléments de dépôt (200) consistent partiellement en des matériaux magnétiques.

25. Cryosubstrat selon la revendication 18, sur la surface duquel sont prévus des marquages optiques ou électromagnétiques pour caractériser le cryosubstrat et/ou des éléments de dépôt particuliers sur le cryosubstrat.
